# EUROPEAN PATENT APPLICATION

(11) **EP 4 847 834 A1**
(43) Date of publication of application: **02.12.2026**
(21) Application number: 25179203.2
(22) Date of filing: 27.05.2025
(51) Int. Cl.: F24C 7/08, F24C 15/32, G01N 25/62

(54) **SENSOR DEVICE FOR A DOMESTIC HOUSEHOLD APPLIANCE AND DOMESTIC HOUSEHOLD APPLIANCE COMPRISING SUCH A SENSOR DEVICE**

(71) Applicant: ELECTROLUX APPLIANCES AKTIEBOLAG, 105 45 Stockholm (SE)
(72) Inventor: KRAUßE, Constantin, 91541 Rothenburg o. d. Tauber (DE); LUCKHARDT, Christoph, 91541 Rothenburg ob der Tauber (DE)
(74) Representative: Electrolux Group Patents

(57) **Abstract**

Sensor device for a domestic household appliance, in particular a domestic cooking oven, comprising:
- a temperature sensor probe (36, 38);
- a body (14, 24, 34) comprising capillary-effective structure, wherein at least a part of the body (14, 24, 34) is arranged in the vicinity of or adjacent to the temperature sensor probe (36, 38);
- a water reservoir (18, 28) or a water supply (40) fluidically coupled to the body (14, 24, 34); wherein the body (14, 24, 34) is configured to draw water from the water reservoir (18, 28) or the water supply (40) by a capillary effect based on the capillary-effective structure of the body.

## Description

The present invention relates to a sensor device for domestic household appliances and a domestic household appliance comprising such a sensor device.

Sensor devices including a combination of a wet bulb thermometer and a dry bulb thermometer have been used for the measurement of relative humidity in cooking chambers of domestic ovens. Such sensor devices are commonly known as psychrometers.

WO 2021/061766 A1 discloses a cooking oven wet bulb sensor system with a reservoir secured to a cooking chamber wall of the cooking oven. The reservoir has an upward-facing orientation. A temperature sensor probe is mounted within the cavity of the reservoir and a water fill opening is positioned to dispense water into the cavity. Water is conveyed from a water supply to the reservoir via gravity and/or water pressure. A flow controller is provided to control the fill level of the reservoir. The flow controller may be a valve, a pump or any other suitable mechanism and may be manually operated by a user or automatically controlled by a microcomputer.

EP 4 354 025 A1 discloses a domestic oven with a steam generating device comprising a wet-bulb sensor device. To detect the wet bulb temperature, it is necessary to provide an amount of water inside the oven and a temperature sensor to detect the water temperature or the temperature in the immediate environment above the water level of the water. For this purpose, a basin is provided and a temperature sensor is immersed in the water. For such a wet-bulb sensor device, it is necessary to keep the water level constant in a narrow range. This is enabled by the provision of a controller with regulating means for setting in operation a predetermined height of the water level.

EP 2 390 587 B1 discloses a cooking device with a steam generation function, with the cooking device having a cooking compartment, at least one heating element for heating up the cooking compartment, at least one air temperature sensor for determining an air temperature of air to be found in the cooking compartment, at least one heatable water reservoir which is located in the cooking compartment and is embodied as an evaporator tray arranged in the floor of the cooking compartment, a water temperature sensor for determining a water temperature of water located in the water reservoir, a control means, with the control means being configured to determine a water temperature needed to reach a predetermined relative humidity of the air in the cooking compartment from a psychrometric relationship using the air temperature, and to set the water temperature to the computed required water temperature.

An objective of the present invention is to provide an advantageous sensor device for measuring a wet bulb temperature.

The objective is solved by according to the invention as respectively defined by the features of the independent claim. Embodiments result from the dependent claims and the exemplary embodiments described below and in connection with the annexed figures.

According to the invention, a sensor device for a domestic household appliance, in particular a domestic cooking oven, comprises:
- a temperature sensor probe;
- a body comprising a capillary-effective structure, wherein at least a part of the body is arranged in the vicinity of or adjacent to the temperature sensor probe;
- a water reservoir or a water supply fluidically coupled to the body;
wherein the body is configured to draw water from the water reservoir or the water supply by a capillary effect based on the capillary-effective structure of the body.

The sensor device having a temperature sensor probe and a body comprising a capillary-effective structure enables cooling of the temperature sensor probe by evaporating water at the temperature sensor probe. The water can be drawn due to the capillary-effect of the capillary-effective structure of the body from the water reservoir or the water supply to the vicinity of the temperature sensor probe. No complex structures such as pumps or valves to maintain the water in the water reservoir at a certain level are required. As long as there is some water present in the water reservoir or supplied by the water supply, the body is able to soak or draw water from the water reservoir or the water supply and transport it due to capillary effect from the water reservoir or the water supply towards the temperature sensor probe, where it cools the temperature sensor probe due to evaporation of the water in the vicinity of the temperature sensor probe. In this way an advantageous sensor device for measuring wet bulb temperature is provided.

It shall be understood that the sensor device according to the invention can be advantageously used in domestic cooking ovens, including those having a steam function and/or a microwave function and/or a convection heating function. However, the sensor device can be used also advantageously in other domestic household appliances such as steam cookers or steam pots, laundry treatment appliances or steam cleaners or the like.

The capillary effect as such is known as the process of a liquid flowing in a narrow space without the assistance of external forces like gravity. The effect can be seen in the drawing up of liquids between the hairs of a paint-brush, in a thin tube such as a straw, in porous materials such as paper and plaster, in some non-porous materials such as clay and liquefied carbon fiber, or in a biological cell. The capillary effect occurs because of intermolecular forces between the liquid and surrounding solid surfaces. If the diameter of the tube is sufficiently small, then the combination of surface tension (which is caused by cohesion within the liquid) and adhesive forces between the liquid and container wall act to propel the liquid.

According to an advantageous embodiment of the invention, the body forms an enclosure at least partially enclosing the temperature sensor probe.

By providing the body with the form of a enclosure for the temperature sensor probe, water is evaporated from the body at least around a part of the circumference of the temperature sensor probe, thereby increasing the cooling effect caused by the evaporation. The temperature sensor probe can be attached to, or placed in, the body in direct contact thereto or the temperature probe can be attached to, or placed in, the body without directing contact to the body, e.g. by means of an additional fixing element.

In a further advantageous embodiment of the invention, the body is fluidically coupled to the water reservoir or the water supply at a location distanced from the temperature sensor probe and wherein the body is configured to draw water from the location where the body is fluidically coupled to the water reservoir or the water supply towards the vicinity of the temperature sensor probe in order to cool the vicinity of the temperature sensor probe.

In that way, the water reservoir or the water supply can be arranged at a distance from the temperature sensor probe. In that way, water that may evaporate directly from the water reservoir or the water supply may not or at least not substantially contribute to the cooling effect caused by the water evaporated from the body. In that way precise temperature measurement is enabled.

Further, it may be advantageous that the capillary-effective structure is a porous structure. The porous structure may have a total porosity of at least 35%, preferably of at least 50%, more preferably of at least 70% or of at least 75%. Further, the porous structure may be an open-cell porous structure.

The capillary-effective structure may comprise material that is particularly suitable for fabricating a body with a structure having a capillary effect, such as diatomaceous earth or moler or MoClay or porous ceramics or ceramic foam or lightweight aggregate concrete or perlite or vermiculite or aluminum-silica or clay or calcareous sandstone or limestone. Particularly advantageous may be material as sold under the trade name "SkamoAlu Hiporos" by the Company Skamol Group. It shall be understood that some of these materials are porous as such, e.g. porous ceramic or ceramic foam, and others are not, e.g. clay or calcareous sandstone. Notwithstanding, a porous body may be formed from a material that is not porous as such.

According to a further advantageous embodiment, the body is a rigid element, in particular of a cylindrical or rectangular or brick-shaped or block-shaped or tubular form,
and/or
in that the body comprises a recess at least partially enclosing the temperature sensor probe.

As a rigid element, the body can be used to support and/or to fix and/or to attach the temperature sensor probe, e.g. in a treatment chamber of a domestic household appliance or to a wall of the cavity inside of the cavity. Further, the temperature sensor probe can be embedded into the body by inserting it into the recess. The recess may be provided in the form of a core hole or a through hole. Further, the recess may have a form corresponding to the form of the temperature sensor probe. A body of brick-shaped or block-shaped form may be provided with various cross sections, such as a trapezoid cross section or a square cross section or may have tapered end sections or chamfers or rounded corners the like.

Also, it may be advantageous if the temperature sensor probe is arranged inside of the body, in particular in such way that at least a part, preferably a tip, of the temperature sensor probe protrudes beyond the body.

In such a configuration the cooling effect on the temperature sensor probe has been found to be very efficient and the temperature sensor probe is protected against mechanical impact.

In a further advantageous embodiment, the temperature sensor probe is releasably connected to the body, in particular by a bajonet mechanism or a screwing mechanism.

In that way, the sensor device can be disassembled for cleaning or replacement of the temperature sensor probe.

A further objective of the present invention is to enable precise measurement of relative humidity within a domestic household appliance.

This objective is solved by a domestic household appliance, in particular domestic cooking oven, comprising:
- a cavity including cavity walls forming a treatment chamber; and
- a sensor device according to the invention for measuring relative humidity within the cavity.

In such a domestic household appliance a very precise measurement of relative humidity within the treatment chamber of the cavity is enabled.

According to an advantageous embodiment, the body is arranged entirely inside of the cavity, in particular wherein the body is fluidically coupled to the water reservoir or the water supply inside of the cavity,
or
in that the body is arranged partially inside of the cavity and partially outside of the cavity, in particular wherein the body is fluidically coupled to the water reservoir or the water supply outside of the cavity.

In an embodiment where the body is arranged entirely inside of the cavity, a water reservoir that is present inside of the cavity can be used as water source for coupling the body thereto. No additional water supply for the sensor device would be required. This embodiment is particularly useful e.g. in a steam cooking oven where a water reservoir for steam generation is provided at the bottom of the cavity or where a water supply for steam generation is already present.

An embodiment where the body is arranged partially inside and partially outside of the cavity, is particularly suitable for domestic household appliances where no water reservoirs present in the treatment chamber and where a water reservoir or water supply can be provided outside of the cavity.

In a further advantageous embodiment, the body has a longitudinal extension with at least one first end and at least one second end distanced from and opposite to the first end, wherein the first end of the body is fluidically coupled to the water reservoir or the water supply and wherein the second end is arranged in the vicinity of or adjacent to or at least partially encloses the temperature sensor probe, in particular wherein the body is arranged in an upright position within the cavity or wherein the body is arranged in a lying position within the cavity.

In such way, the water can be transported from the water reservoir or the water supply to the second end of the body and, thus, to the location of the temperature sensor probe, where it is evaporated. Therefore, a simple construction allows efficient cooling of the temperature sensor probe.

According to an additional or alternative embodiment, the water reservoir or water supply contains water that defines a water level, wherein the water level is located vertically lower than the temperature sensor probe,
or
wherein the water level is located vertically higher than the temperature sensor probe.

The capillary effect of the body works independent of the vertical position of the water level relative to the temperature sensor probe. Thus, the installation of the sensor device can be easily adapted to specific requirements or designs of different cavities or treatment chambers.

According to a further advantageous embodiment, the temperature sensor probe is a first temperature sensor probe and in that the sensor device comprises a second temperature probe, wherein the first temperature probe and the second temperature probe are arranged at least partially inside of the cavity at a distance to each other.

In such a configuration, an advantageous measurement system is created for precisely measuring relative humidity within the treatment chamber of a domestic household appliance.

Further, an advantageous embodiment may include circuitry connectable or connected with the first and second temperature probes that is configured to receive signals from the first and second temperature probes that are indicative of temperatures at the first and second temperature probes, respectively, and wherein the circuitry is further configured to process the signals in order to calculate a value representative for a relative humidity in the cavity.

In that way, a domestic household appliance is generated that comprises a very precise measurement system for relative humidity within its treatment chamber and that has the means for processing and calculating the respective measurement values.

Also, it may be advantageous if the body is releasably attached to a cavity wall inside of the cavity, in particular to a bottom wall or rear wall or side wall of the cavity or to a wall that forms a part of the water reservoir located inside the cavity.

In that way, the body with the temperature sensor probe can be detached from the cavity, e.g. if required for cleaning, descaling or other maintenance purposes.

In a further advantageous embodiment of the invention, the water reservoir or water supply that is fluidically coupled to the body is a water reservoir or a water supply of a steam generator or evaporator for producing a steam atmosphere within the cavity of the domestic household appliance.

In such an embodiment that is typically implemented in a steam cooking oven in which a water reservoir or water supply is present for the steam producing function of the oven, it is advantageous to use the water reservoir or water supply also for the cooling of the sensor device.

Furthermore, a method for operating a domestic household appliance according to any of the claims 13 to 15 can be claimed that comprises the steps:
- Measuring the relative humidity within the cavity by using the first and second temperature probes which output first and second signals, that are indicative of different temperatures at the first and second temperature probes, respectively;
- Processing the first and second signals and calculating from the processed first and second signals a value representative for the relative humidity in the cavity.

An advantageous embodiment of the method may comprise the further steps:
- Checking the processed first and second signals and/or the value representative for the relative humidity in the cavity for being within an expected processed signal range or within an expected value range;
- Determining, if the processed first and second signals and/or the value representative for the relative humidity in the cavity are/is not within the expected processed signal range or not within the expected value range, that the sensor device is not in fully operational condition;
- Outputting an alert to a user or a service provider of the domestic household appliance that the sensor device or parts of the sensor device has/have to be cleaned or descaled or replaced,
- and/or
- Carrying out an automatic or semi-automatic function of the domestic household appliance for cleaning or descaling or replacing the sensor device.

Non-limiting embodiments of the present invention will now be described, by way of example, with reference to the accompanying drawings. Same or functionally corresponding elements are reference with same reference signs. In the drawings:
- Figure 1 illustrates a schematical drawing of a sensor device according to a first embodiment of the invention;
- Figure 2 illustrates a schematical drawing of a sensor device according to a second embodiment of the invention;
- Figure 3 illustrates a schematical drawing of a sensor system comprising a sensor device according to the invention;

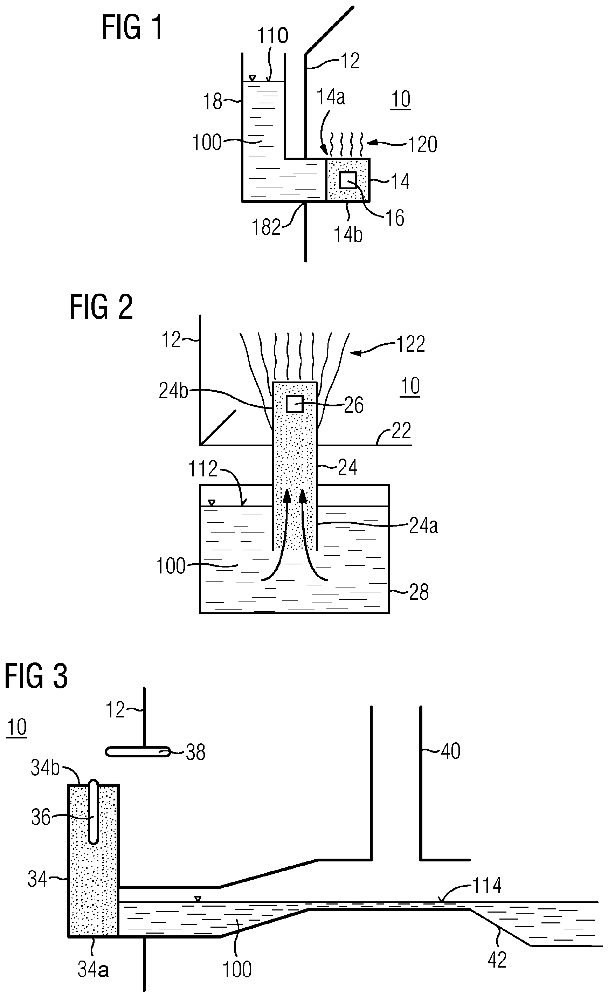

Fig. 1 illustrates a schematical drawing showing a sensor device connected to a side wall 12 of a cavity of a cooking oven according to a first embodiment.

The cavity generally defines a cooking chamber 10 that might be closable by an oven door and that is separated from an exterior environment by means of the side wall 12 and further walls of the cavity. Within the cooking chamber 10, a body 14 is located that encloses a temperature sensor probe 16. Outside of the cooking chamber 10, a water reservoir 18 is located that is fluidically coupled to the body 14.

The body 14 has a square cross-section and may have a longitudinal extension longer than the sides of the square cross-section. In other words, the body 14 can be provided in the form of a rectangular cuboid, wherein only the first end 14a of the body 14 is fluidically coupled to the body 14 and wherein the opposite second end 14b of the body 14 is located within the cooking chamber 10, but distanced from the first end 14a. Of course, the body 14 may have any other suitable cross-section or any other suitable form.

In the perspective of FIG 1, second end 14b is not visible. The longitudinally extending side of the body 14 may be oriented in the horizontal plane. In other words, body 14 may be arranged in a lying position within the cavity.

A temperature sensor probe 16 is located within body 14, such that the temperature sensor probe 16 is enclosed in the region of the second end 14b of body 14, but also such that the temperature sensor probe 16 is not present in the region of the first end 14a of body 14. A tip of the temperature sensor probe 16 may protrude beyond the body 14 and into the cooking chamber 10.

Further, the water reservoir 18 may comprise a coupling section 182 coupling the water reservoir 18 to the first end 14a of the body 14. The coupling section 182 may be a tube or conduit or a portion of a containment of the water reservoir 18, or the like. In this specific embodiment, the coupling portion 182 extends through side wall 12 of the cavity from the main section of the water reservoir 18 that is located outside of the cavity towards body 14 that is located completely inside of the cavity. The coupling portion 182 may extend through any other wall of the cavity, alternatively, if appropriate.

The water reservoir 18 is filled with water 100 so that a defined water level 110 is present within the water reservoir 18. The first end 14a of the body 14 couples with the coupling section 182 so that the water 100 present within the coupling section 182 is in direct contact with the first end 14a.

According to all embodiments, the body 14 comprises a capillary-effective structure that enables the body 14 to draw water 100 due to a capillary effect occurring in the capillary-effective structure. In particular, the body 14 can draw water 100 from the first end 14a of the body 14 through the body 14 towards the second end 14b of the body 14.

On its way through body 14 and at the second end 14b of body 14, the water drawn into body 14 from the water reservoir 18 evaporates from body 14, since the watervapor mixture within the cavity tends towards reaching a vapor-liquid equilibrium. The only prerequisite for the occurrence of the evaporation process is that the relative humidity within the space around the body 14 is below 100%.

The evaporated water emerging from the body 14 cools the temperature sensor probe 16 that is embedded within the body 14. The temperature sensor probe 16 therefore detects a lower temperature compared to a temperature sensor probe without any cooling.

In the specific embodiment of FIG 1, the water level 110 in the water reservoir 18 is higher with reference to a vertical direction than the coupling section 182 or the location where the coupling section 182 couples with the body 14 or the position of the temperature sensor probe 16 embedded in the body 14.

Fig. 2 illustrates a schematical drawing of a sensor device connected to a bottom wall 22 of a cavity of a cooking oven according to a second embodiment.

Like the first embodiment, in the second embodiment the cavity generally defines a cooking chamber 10 that might be closable by an oven door and that is separated from an exterior environment by means of the side wall 12, a bottom wall 22 and further walls of the cavity. Within the cooking chamber 10, a body 24 is located that encloses a temperature sensor probe 26. Outside of the cooking chamber 10, a water reservoir 28 is located that is fluidically coupled to the body 24.

The body 24 may have a square cross-section, but also any other suitable cross-section or suitable form. In this specific embodiment, body 24 is provided in the form of a rectangular cuboid, wherein only the first end 24a of body 24 is fluidically coupled to temperature sensor probe 26 and wherein the opposite second end 24b of body 24 is located within the cooking chamber 10 but distanced from the first end 14a.

In particular, the body 24 may be oriented or arranged in an upright position within the cavity. In other words, the longitudinally extending side of the body 14 may be oriented in a vertical plane.

A temperature sensor probe 26 is located within body 14 such that the temperature sensor probe 16 is enclosed in the region of the second end 24b of body 14, but also such that the temperature sensor probe 26 is not present in the region of the first end 24a of body 24. A tip of the temperature sensor probe 26 may protrude beyond the body 14 and into the cooking chamber 10, even if not visible.

Further, the water reservoir 28 is arranged below the bottom wall 22 of the cavity. Body 24 extends through a recess in the bottom wall 22 and protrudes into the water reservoir 28. Therefore, in this configuration a coupling section for coupling the water reservoir with the body 24 is not necessary.

The water reservoir 28 is filled with water 100 so that a defined water level 112 is present within the water reservoir 28. The first end 24a of the body 24 protrudes so far that it is immersed in the water 100.

Also, with respect to the second embodiment, body 24 comprises a capillary-effective structure that enables body 24 to draw water 100 due to a capillary effect occurring in the capillary-effective structure. In particular, the body 24 can draw water 100 from the first end 24a of the body 24 that is immersed in the water 100 below the cooking chamber 10 and vertically through body 24 towards the second end 24b of the body 14

On its way through body 24 and at the second end 24b of body 24, the water drawn into body 24 from the water reservoir 28 evaporates under the same conditions as outlined with respect to the first embodiment.

The evaporated water emerging from the body 24 cools the temperature sensor probe 26 that is embedded within the body 24. The temperature sensor probe 26 therefore detects a lower temperature compared to a temperature sensor probe 26 without any cooling.

In the specific embodiment of FIG 2, the water level 110 in the water reservoir 18 is lower with reference to a vertical direction than the position of the temperature sensor probe 26 within the body 14.

FIG 3 illustrates a schematical drawing of a sensor system comprising a sensor device according to the invention.

Only a side wall 12 of a cavity is shown that separates a cooking chamber 10 from an exterior environment of the cooking chamber 10.

Within the cooking chamber 10, a body 34 is located that encloses a temperature sensor probe 36. Outside of cooking chamber 10, an evaporator 42 is located that is fluidically coupled to the body 34. The evaporator 42 is provided for evaporating water and supplying steam into the cooking chamber 10 for generating a steam cooking atmosphere therein.

For that purpose, a water supply 40 supplies water to the evaporator 42 into a space or water reservoir. The water supply 40 may comprise a valve or the like for regulating the supply of water to the reservoir of the evaporator 42. At the same time, the water reservoir of the evaporator 42 is fluidically coupled to the body 34. It shall be noted that the function of the sensor device is independent of the operation of the evaporator 42. The body 34 may be fluidically coupled to the water reservoir of the evaporator 42, or alternatively, to a water reservoir that is not fluidically or otherwise coupled to the evaporator 42.

Within the cooking chamber 10, the body 34 is located that encloses a temperature sensor probe 36.

Body 34 may have a square cross-section, but also any other suitable cross-section or any other suitable form. In this specific embodiment, body 34 is provided in the form of a rectangular cuboid, wherein only the first end 34a of body 34 is fluidically coupled to the water reservoir of the evaporator 42 and wherein the opposite second end 34b of body 34 is located within the cooking chamber 10 but distanced from the first end 34a.

In particular, the body 34 may be oriented or arranged in an upright position. In other words, the longitudinally extending side of the body 34 may be oriented in a vertical plane.

A temperature sensor probe 36 is located within body 36 such that the temperature sensor probe 36 is enclosed in the region of the second end 34b of body 34, but also such that the temperature sensor probe 36 is not present in the region of the first end 34a of body 34. As being perceivable from FIG 3, a tip of the temperature sensor probe 36 protrudes beyond the body 14 and into the cooking chamber 10.

The temperature sensor probe 36 extends longitudinally and is embedded within the body 34 in a way that the longitudinal axes of the temperature sensor probe 36 and the body 34 are substantially parallel.

The water reservoir of the evaporator 42 extends through the side wall 12 of the cavity in such a way that the body 36 can couple to the water reservoir and, at the same time, that steam generated by the evaporator can emerge from the water reservoir and into the cavity. Alternatively, it is also possible that the steam generated by the evaporator is supplied into the cavity through different means distanced from the body 36.

In this specific embodiment, body 34 is directly coupled with the water reservoir of the evaporator in the cavity. However, the body 34 can be coupled to the water reservoir also in a different way.

The water reservoir is filled with water 100 so that a defined water level 114 is present within the water reservoir. The first end 34a of the body 34 forms a barrier or containment wall of the water reservoir. The water can easily enter the first end 34a of the body 34 and can be drawn upwards beyond the water level in the water reservoir and towards the second end 34b. It is possible that some or all sides of body 34 that are not intended for contact with water are sealed by appropriate means against leakage, e.g. by a water tight coating or water tight layer, in order prevent unintended water leakage through the body 34 into the cavity.

Als, in this embodiment, body 34 comprises a capillary-effective structure that enables body 34 to draw water 100 due to a capillary effect occurring in the capillary-effective structure. In particular, body 34 can draw water 100 from the first end 34a of the body 34 through the body 34 towards the second end 34b of the body 34.

As outlined above, on its way through body 34 and at the second end 34b of body 34, the water drawn into body 34 from the water reservoir, evaporates, since the watervapor mixture within the cavity tends towards reaching a vapor-liquid equilibrium. The only prerequisite for the occurrence of the evaporation process is that the relative humidity within the space around the body 34 is below 100%.

In this specific embodiment, the water level 114 in the water reservoir is higher with reference to a vertical direction than the location where the water reservoir couples with the body 34 or the position of the temperature sensor probe 36 embedded in the body 34.

The evaporated water emerging from the body 34 cools the temperature sensor probe 36 that is embedded within the body 34. In order to enable measurement of relative humidity within the cooking chamber 10, a second temperature sensor probe 38 is attached to the side wall 12 of the cavity. The second temperature sensor probe 38 measures a dry bulb temperature which means that the second temperature sensor probe 38 is not cooled by evaporation such as the first temperature prove 36 by the evaporation from the body 36. Therefore, the first temperature probe detects a lower temperature or wet bulb temperature compared to the second temperature probe which detects a higher temperature or dry bulb temperature.

From the difference between the temperature measured at the first temperature sensor probe 36, i.e. the wet bulb temperature and at the second temperature sensor probe 38, i.e. the dry bulb temperature a value representative for a relative humidity in the cavity can be determined. For that purpose, the domestic household appliance can comprise circuitry connectable or connected with the first and second temperature probes 36, 38. The circuitry may be configured to receive signals from the first and second temperature probes 36, 38 that are indicative of different temperatures at the first and second temperature probes 36, 38, i.e. the lower wet bulb temperature and the higher dry bulb temperature. The received signals may be processed by the circuitry and used to calculate from the processed signals a value that is representative for a relative humidity in the cavity.

### List of Reference Signs

- 10: Cooking chamber
- 12: Cavity side wall
- 22: Cavity bottom wall
- 14, 24, 34: Body
- 14a, 24a, 34a: First end
- 14b, 24b, 34b: Second end
- 16, 26, 36: First temperature sensor probe
- 18, 28: Water reservoir
- 38: Second temperature sensor probe
- 40: Water supply
- 42: Evaporator
- 100: Water
- 110, 112, 114: Water level
- 120, 122: vapour
- 182: Coupling section

## Claims

1. Sensor device for a domestic household appliance, in particular a domestic cooking oven, comprising:
- a temperature sensor probe (36, 38);
- a body (14, 24, 34) comprising a capillary-effective structure, wherein at least a part of the body (14, 24, 34) is arranged in the vicinity of or adjacent to the temperature sensor probe (36, 38);
- a water reservoir (18, 28) or a water supply (40) fluidically coupled to the body (14, 24, 34);
wherein the body (14, 24, 34) is configured to draw water (100) from the water reservoir (18, 28) or the water supply (40) by a capillary effect based on the capillary-effective structure of the body 14, 24, 34).

2. Sensor device according to claim 1, **characterized in that** the body (14, 24, 34) forms an enclosure at least partially enclosing the temperature sensor probe (36, 38).

3. Sensor device according to any one of the preceding claims, **characterized in that** the body (14, 24, 34) is fluidically coupled to the water reservoir (18, 28) or the water supply (40) at a location distanced from the temperature sensor probe (36, 38) and wherein the body (14, 24, 34) is configured to draw water from the location where the body (14, 24, 34) is fluidically coupled to the water reservoir (18, 28) or the water supply (40) towards the vicinity of the temperature sensor probe (36, 38) in order to cool the vicinity of the temperature sensor probe (36, 38).

4. Sensor device according to any one of the preceding claims, **characterized in that** the capillary-effective structure is a porous structure,
in particular wherein the porous structure has a total porosity of at least 35%, preferably of at least 50%, more preferably of at least 70% or of at least 75%, and/or
in particular wherein the porous structure is an open-cell porous structure.

5. Sensor device according to any one of the preceding claims, **characterized in that** the body (14, 24, 34) is a rigid element, in particular of a cylindrical or rectangular or brick-shaped or block-shaped or tubular form,
and/or
**in that** the body (14, 24, 34) comprises a recess at least partially enclosing the temperature sensor probe (36, 38).

6. Sensor device according to any one of the preceding claims, **characterized in that** temperature sensor probe (36, 38) is arranged inside of the body (14, 24, 34), in particular in such way that at least a part, preferably a tip, of the temperature sensor probe (36, 38) protrudes beyond the body (14, 24, 34).

7. Sensor device according to any one of the preceding claims, **characterized in that** the temperature sensor probe (36, 38) is releasably connected to the body (14, 24, 34), in particular by a bajonet mechanism or a screwing mechanism.

8. Domestic household appliance, in particular domestic cooking oven, comprising:
- a cavity including cavity walls (12, 22) forming a treatment chamber (10); and
- a sensor device according to any one of the preceding claims for measuring relative humidity within the cavity.

9. Domestic household appliance according to claim 8, **characterized in that** the body (14, 24, 34) is arranged entirely inside of the cavity, in particular wherein the body (14, 24, 34) is fluidically coupled to the water reservoir (18, 28) or the water supply (40) inside of the cavity,
or
**in that** the body (14, 24, 34) is arranged partially inside of the cavity and partially outside of the cavity, in particular wherein the body (14, 24, 34) is fluidically coupled to the water reservoir (18, 28) or the water supply (40) outside of the cavity.

10. Domestic household appliance according to any of claims 8 or 9, **characterized in that** the body (14, 24, 34) has a longitudinal extension with at least one first end and at least one second end distanced from and opposite to the first end, wherein the first end of the body (14, 24, 34) is fluidically coupled to the water reservoir (18, 28) or the water supply (40) and wherein the second end is arranged in the vicinity of or adjacent to or at least partially encloses the temperature sensor probe (36, 38), in particular wherein the body (14, 24, 34) is arranged in an upright position within the cavity or wherein the body (14, 24, 34) is arranged in a lying position within the cavity.

11. Domestic household appliance according to claim 10, **characterized in that** the water reservoir (18, 28) or water supply (40) contains water that defines a water level, wherein the water level is located vertically lower than the temperature sensor probe,
or
wherein the water level is located vertically higher than the temperature sensor probe (36, 38).

12. Domestic household appliance according to any one of the claims 8 to 11, **characterized in that** the temperature sensor probe (36, 38) is a first temperature sensor probe (36)and **in that** the sensor device comprises a second temperature probe (38), wherein the first temperature probe (36) and the second temperature probe (38) are arranged at least partially inside of the cavity at a distance to each other.

13. Domestic household appliance according to claim 12, further comprising circuitry connectable or connected with the first and second temperature probes (36, 38) that is configured to receive signals from the first and second temperature probes (36, 38) that are indicative of different temperatures at the first and second temperature probes (36, 38), respectively, and wherein the circuitry is further configured to process the signals in order to calculate from the processed signals a value representative for a relative humidity in the cavity.

14. Domestic household appliance according to any one of the claims 8 to 13, **characterized in that** the body (14, 24, 34) is releasably attached to a cavity wall (12, 22) inside of the cavity, in particular to a bottom wall (22) or rear wall or side wall (12) of the cavity or to a wall that forms a part of the water reservoir (18, 28) located inside the cavity.

15. Domestic household appliance according to any of claims 8 to 14, **characterized in that** the water reservoir (18, 28) or water supply (40) that is fluidically coupled to the body (14, 24, 34) is a water reservoir (18, 28) or a water supply (40) of a steam generator or evaporator (42) for producing a steam atmosphere within the cavity of the domestic household appliance.
